# EUROPÄISCHE PATENTSCHRIFT

(11) **EP 1 651 876 B1**
(45) Veröffentlichungstag und Bekanntmachung des Hinweises auf die Patenterteilung: **23.09.2009**
(21) Anmeldenummer: 04740748.1
(22) Anmeldetag: 07.07.2004
(51) Int. Cl.: F16C 32/06

(54) **ÖLFILMLAGER FÜR WALZENZAPFEN MIT HYDROSTATISCHER UNTERSTÜTZUNG**
OIL FILM BEARING FOR ROLL PINS HAVING A HYDROSTATIC SUPPORT
PALIER A FILM D'HUILE POUR TOURILLON DE CYLINDRE A SUPPORT HYDROSTATIQUE

(30) Priorität: 08.08.2003 DE 10336894
(43) Veröffentlichungstag der Anmeldung: 03.05.2006
(73) Patentinhaber: SMS Siemag AG, 40237 Düsseldorf (DE)
(72) Erfinder: KELLER, Karl, 57271 Hilchenbach (DE); ROEINGH, Konrad, 57271 Hilchenbach (DE)
(74) Vertreter: Klüppel, Walter
(86) Internationale Anmeldenummer: PCT/EP2004/007435
(87) Internationale Veröffentlichungsnummer: WO 2005/017377

(56) Entgegenhaltungen:
- EP-A- 0 812 995
- EP-A- 1 298 335
- DD-A- 242 456
- US-A- 3 998 502

## Beschreibung

Die Erfindung betrifft ein Ölfilmlager für Walzenzapfen, der bzw. dessen auf ihn aufgezogene Zapfenbuchse von einer in einem Einbaustück angeordneten Lagerbuchse umgeben ist, wobei die Lagerbuchse mindestens zwei im Wesentlichen in einer gemeinsamen axialen Linie angeordnete, innen liegende Hydrostatiktaschen aufweist, die über ein Rückschlagventil und über in der Lagerbuchse verlaufende Bohrungen mit einem Druckmittel speisbar sind, und wobei Drosseln in den Bohrungen eine optimale hydrostatische Lagerung, auch bei einer Schieflage des Walzenzapfens bzw. der Zapfenbuchse in der Lagerbuchse gewährleisten.

Derartige Ölfilmlager sind bekannt. Sie weisen in der Regel in einer Lagerbuchse zwei Druckzonen auf, die um 180 Grad versetzt sind. In jeder dieser Druckzonen sind zwei Hydrostatiktaschen axial versetzt angeordnet. Dabei werden die Hydrostatiktaschen einer Druckzone im Betrieb so lange verwendet, bis durch einen Verschleiß im Bereich der Druckzone die optimalen Hydrostatikeigenschaften nicht mehr gewährleistet sind. Im Anschluß daran läßt sich die Lagerbuchse im Einbaustück um 180 Grad drehen, so daß die beiden weiteren Hydrostatiktaschen der zweiten Druckzone zum Einsatz kommen können. In den vier Bohrungen zu den jeweils zwei Hydrostatiktaschen der beiden Druckzonen sind Drosseln eingesetzt. Diese sind wegen der geringen Wanddicke der Lagerbuchsen und der dadurch gegebenen sehr kleinen Durchmesser der Bohrungen sehr filigran gearbeitet. Sie dienen dazu, das von einem Druckanschluß, an dem Druckmittel mit ca. 200 bis 2000 bar ansteht, kommende Druckmedium möglichst gleichmäßig auf die beiden Hydrostatiktaschen einer Druckzone zu verteilen.

Wird durch eine Schieflage der Zapfenbuchse in der Lagerbuchse eine der Hydrostatiktaschen der Druckzone halbwegs freigelegt, so kann aus der freigelegten Hydrostatiktasche vergleichsweise mehr Druckmedium strömen. Dadurch würde in dieser Hydrostatiktasche ein großer Druckabfall entstehen. Die Drosseln bewirken, daß sich der Druckabfall in dieser Lagetasche in Grenzen hält. Durch den entstehenden Differenzdruck zwischen den beiden Hydrostatiktaschen wird ein Korrekturmoment gebildet, welches der Schieflage entgegenwirkt.

Bei derartigen Ölfilmlagern sind damit vier der filigranen und sehr teueren Drosseln in einer Lagerbuchse untergebracht. Zwei der vier Drosseln werden jedoch nur verwendet. Da die Drosseln in den Bohrungen der Lagerbuchsen untergebracht sind ist ein inspizieren und gegebenenfalls austauschen der Drosseln nur möglich, wenn das komplette Lager ausgebaut wird, so daß das Servicepersonal an die Bohrungen in der Lagerbuchse herankommt. Da die Drosseln sehr filigran gearbeitet sind, können sie leicht verstopfen, insbesondere dann, wenn das zulaufende Öl nicht ausreichend gefiltert ist. Bei verstopften Drosseln versagt die Hydrostatikfunktion. Eine vorbeugende Inspektion ist aus den oben genannten Gründen nur sehr aufwendig möglich.

Die beiden Bohrungen zu den Hydrostatiktaschen sind in der Lagerbuchse zusammengeführt, um von einem Rückschlagventil gespeist werden zu können. Dazu wird bei der bekannten Lagerbuchse in ihrem, dem Anschluß dienenden Randbereich durch sehr kostenintensives Auftragschweißen eine Bund vorgesehen, in dem durch im Wesentlichen radial verlaufende, sich kreuzende Bohrungen die beiden Bohrungen miteinander verbunden sind. Im Schnittpunkt der Kreuzbohrungen ist das Rückschlagventil axial angeschlossen.

Bedingt durch den begrenzten Bauraum der Lagerbuchsen ist auch der Anschluß des Rückschlagventils an der Lagerbuchse oft Grund für Betriebsstörungen. Es treten leicht Leckagen auf, die durch lösen der Hochdruckverschraubungen der Rückschlagventile hervorgerufen werden können. Ein lösen der Rückschlagventile, die dazu dienen, daß Druckmittel in den Hydrostatiktaschen zu belassen, auch wenn z.B. die Hochdruckschläuche zum Rückschlagventil durch eine Betriebsstörung keine Druckmittel mehr liefern, kann z.B. durch mangelhafte Montage der Rückschlagventile in dem begrenzten Bauraum entstehen. Da vier Lager von einem, Drucksystem versorgt werden kann die Leckage an einem Rückschlagventil zu einem Ausfall der Hydrostatik in allen vier Lagern führen.

Die US 3,998,502 offenbart ein derartiges gattungsgemäßes Ölfilmlager, durch welches integrierte Regelorgane zur selbsttätigen Vergrößerung bzw. Verkleinerung der Drosselspalte und zur gleichzeitigen, selbsttätigen Verkleinerung bzw. Vergrößerung der Lagerabschlussspalte in Abhängigkeit von Größe und Richtung der Lagerbelastung zum Stand der Technik gehören. Auch hier muss das Lager auseinander gebaut werden, um an die Regelorgane kommen zu können.

Die EP 1 298 335 A2 sieht die Unterbringung sowohl der Drosseln als auch des Rückschlagventils im Lagergehäuse vor. Auch hier muss zur Inspektion bzw. zum Auswechseln der Drosseln und des Rückschlagventils eine Demontage des Lagers vorgenommen werden.

Der Erfindung liegt die Aufgabe zugrunde, ein erfindungsgemäßes Ölfilmlager so weiter zu bilden, daß die Hydrostatikfunktion des Lagers in kostengünstiger Weise sichergestellt ist und bei dem die Inspektion der Drosseln ohne weiteres möglich ist.

Dazu wird vorgeschlagen, daß die mindestens zwei Bohrungen einer Druckzone mit einem Anschlußblock verbunden sind, daß der Anschlußblock die Drosseln aufnimmt, und daß dem Anschlußblock das Rückschlagventil zugeordnet ist.

Durch das Herausnehmen der Drosseln aus der Lagerbuchse und das Einbringen in einen Anschlußblock wird bewirkt, daß die Drosseln nunmehr in einem Bereich eingesetzt werden, der nicht mehr abhängig ist von dem begrenzten Durchmesser der Bohrungen der Lagerbuchsen. Erfindungsgemäß können neben den bekannten Drossel auch größere Drosseln verwendet werden, die kostengünstiger herzustellen sind und die nicht so leicht verstopfen. Auch das Rückschlagventil ist nicht mehr im begrenzten Einbauraum der Lagerbuchse montiert sondern am Anschlußblock, so daß die Anschlüsse des Rückschlagventils besser zugänglich sind und es bei der Montage wegen des ausreichenden Platzes zu keinen Fehlem und damit zu keinen Leckagen kommt.

Von Vorteil ist, wenn der Anschlußblock frei zugänglich am Einbaustück befestigt ist, so daß es auch für eine Inspektion der Drosseln keines Ausbaus des Lagers mehr bedarf.

Als Vorteilhaft hat sich erwiesen, daß die mindestens zwei Bohrungen einer Druckzone, die zu den mindestens zwei Hydrostatiktaschen führen über Hochdruckanschlüsse und über feste Leitungen mit dem Anschlußblock verbunden sind. Es bedarf dabei keiner ständigen Montage und Demontage des Rückschlagventils, da eine Inspektion der Drosseln außerhalb dieses Systems erfolgen kann.

Durch den Anschluß zweier Hochdruckleitungen entfällt die Kreuzverbindung der Bohrungen in der Lagerbuchse. Das kostenintensive Auftragscheißen eines Bundes kann damit ebenfalls entfallen.

Es hat sich bewährt, daß die Leitungen aus Röhren bestehen, die einem großen Druck standhalten, und die zum Ausgleich eines eventuellen Lagerspiels dennoch elastisch verformbar sind. Die Röhren können dazu z.B. in Form einer Schleife gelegt werden, so daß sie trotz ihres festen Aufbaus eine mögliche Relativbewegung zwischen dem den Anschlußblock halternden Einbaustück und der Lagerbuchse auszugleichen vermögen.

Die Erfindung wird anhand eines Beispiels näher erläutert.
Dabei zeigt:
- Figur 1: das Erfindungsgemäße Ölfilmlager,
- Figur 2: die Verbindung des Ölfilmlagers mit dem Anschlußblock, und
- Figur 3: den Anschlußblock mit Rückschlagventil.

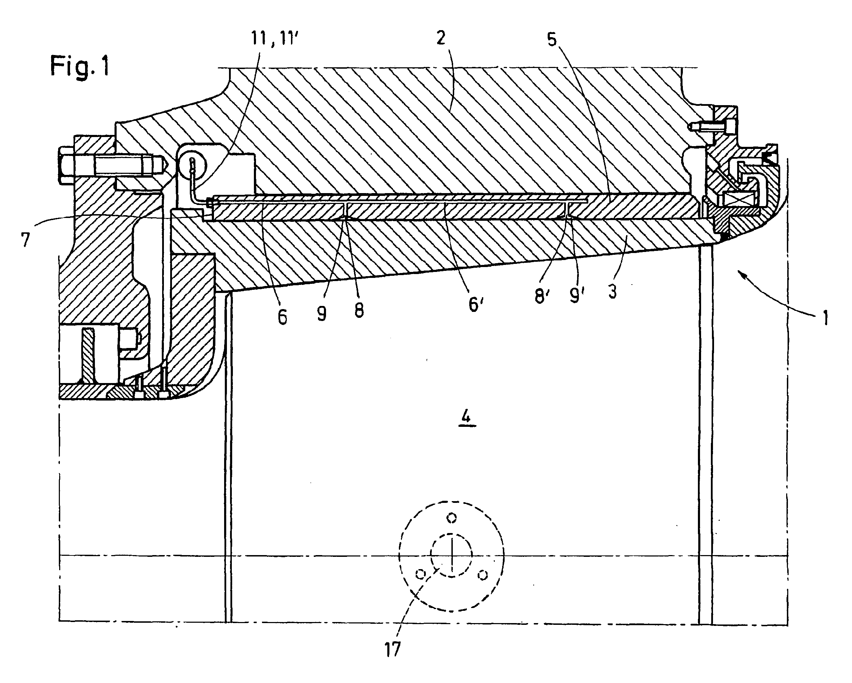

Figur 1 zeigt ein Ölfilmlager 1, das in ein Einbaustück 2 eingebaut ist und aus einer Zapfenbuchse 3 die auf einem Walzenzapfen 4 angeordnet ist, und einer Lagerbuchse 5 die im Einbaustück 2 sitzt, besteht.

In der Lagerbuchse 5 sind zwei Bohrungen 6, 6', die teilweise hintereinander liegen, angeordnet, die vom äußeren Rand 7 der Lagerbuchse 5 zu Radialbohrungen 8, 8' verlaufen, die in Hydrostatiktaschen 9, 9' enden.

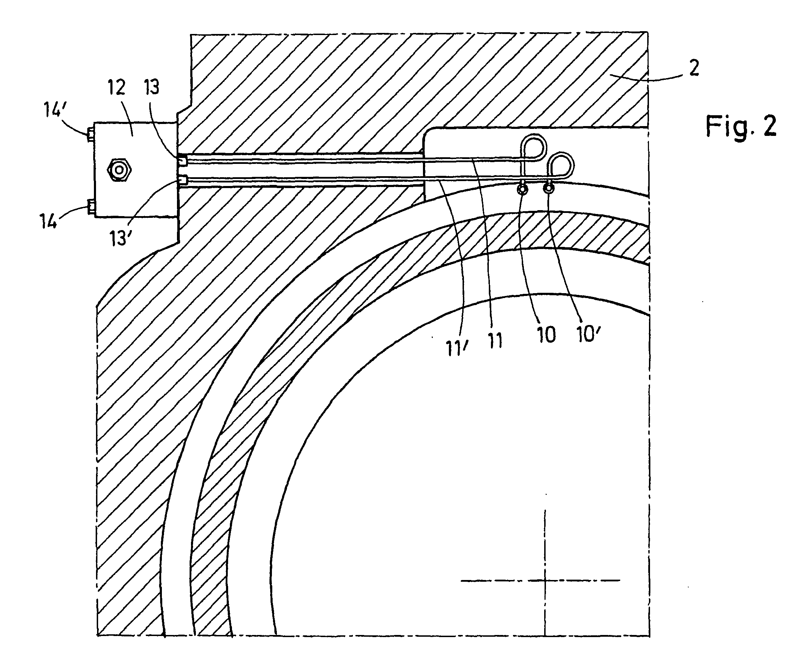

An der Lagerbuchse 5 sind Hochdruckanschlüsse 10, 10' vorgesehen, an denen feste Leitungen 11, 11' montiert sind, die zu einem Anschlußblock 12 führen und hier ebenfalls durch Hochdruckanschlüsse 13, 13' befestigt sind (siehe Figur 2). Der Anschlußblock 12 ist über Schrauben 14, 14' am Einbaustück 2 festgelegt.

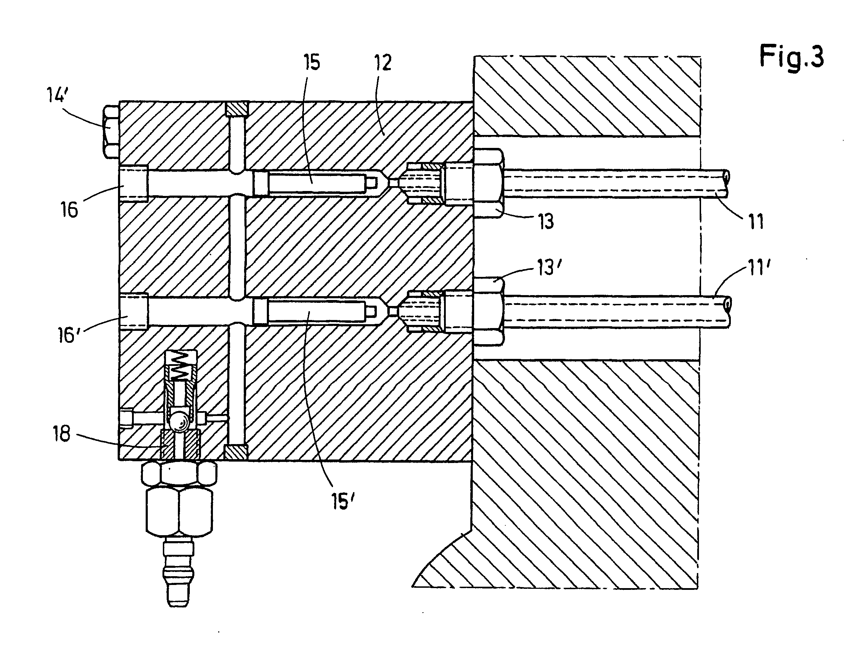

Figur 3 zeigt die Leitungen 11, 11', welche über die Hochdruckanschlüsse 13, 13' mit dem Anschlußblock 12 verbunden sind. Im Anschlußblock 12 sind die Drosseln 15, 15' angeordnet. Die Drosseln sind nach Entfernen von ohne weiteres zugänglichen Stopfen 16, 16' leicht aus dem Anschlußblock 12 zwecks Inspektion bzw. Austausch zu entnehmen. Im Anschlußblock 12 kann ausreichend Platz vorgesehen werden, um Drosseln verwenden zu können, die nicht so filigran aufgebaut sind wie die Drosseln, die bisher in den Bohrungen der Lagerbuchsen Anwendung fanden. Hinzu kommt, daß lediglich zwei Drosseln vorgesehen sind. Wird die Lagerbuchse 5 um 180 Grad gedreht, so müssen lediglich die Hochdruckanschlüsse 10, 10' gelöst werden. Nach Lösung eines Haltebolzens 17 (siehe Figur 1) kann die Lagerbuchse 5 um 180 Grad verdreht werden und die um 180 Grad verdrehten Bohrungen mit den Hochdruckanschlüssen 10, 10' verbunden werden. Dadurch ergibt sich eine Einsparung von zwei Drosseln. Es werden anstelle der bisher üblichen vier Drosseln nur noch zwei Drosseln benötigt.

Figur 3 zeigt weiterhin das Rückschlagventil 18, welches ebenfalls leicht zugänglich am Block 12 befestigt ist. Durch die leichte Zugänglichkeit sind Montagefehler bei der Montage des Rückschlagventils 18 ausgeschlossen.

### Bezugszeichenliste

- 1: Ölfilmlager
- 2: Einbaustück
- 3: Zapfenbuchse
- 4: Walzenzapfen
- 5: Lagerbuchse
- 6: Bohrung
- 7: Rand
- 8: Radialbohrung
- 9: Hydrostatiktasche
- 10: Hochdruckanschluß
- 11: Leitung
- 12: Anschlußblock
- 13: Hochdruckanschluß
- 14: Schraube
- 15: Drossel
- 16: Stopfen
- 17: Haltebolzen
- 18: Rückschlagventil

## Patentansprüche

1. Ölfilmlager (1) für Walzenzapfen (4), der bzw. dessen auf ihn aufgezogene Zapfenbuchse (3) von einer in einem Einbaustück (2) angeordneten Lagerbuchse (5) umgeben ist, wobei die Lagerbuchse (5) mindestens zwei im Wesentlichen in einer gemeinsamen axialen Linie angeordnete, innen liegende Hydrostatiktaschen (9, 9') aufweist, die über ein Rückschlagventil (18) und über in der Lagerbuchse (5) verlaufende Bohrungen (6, 6') mit einem Druckmittel speisbar sind, und wobei Drosseln (15, 15') in den Bohrungen (6, 6') eine optimale hydrostatische Lagerung, auch bei einer Schieflage des Walzenzapfens (4) bzw. der Zapfenbuchse (3) in der Lagerbuchse (5) gewährleisten,
**dadurch gekennzeichnet,**
**daß** die mindestens zwei Bohrungen (6, 6') mit einem Anschlußblock (12) verbunden sind, daß die Drosseln (15, 15') im Anschlußblock (12) aufgenommen sind und daß dem Anschlußblock (12) das Rückschlagventil (18) zugeordnet ist.

2. Ölfilmlager nach Anspruch 1,
**dadurch gekennzeichnet,**
**daß** der Anschlußblock (12) frei zugänglich am Einbaustück (2) festgelegt ist.

3. Ölfilmlager nach Anspruch 1 oder 2,
**dadurch gekennzeichnet,**
**daß** die Bohrungen (6, 6') und der Anschlußblock (12) mit Hochdruckanschlüssen (10, 10'; 13, 13') versehen sind und daß die Hochdruckanschlüsse (10, 10') der Bohrungen (6, 6') mit den Hochdruckanschlüssen (13, 13') des Anschlußblocks (12) über feste Leitungen (11, 11') miteinander verbunden sind.

4. Ölfilmlager nach Anspruch 3,
**dadurch gekennzeichnet,**
**daß** die Leitungen (11, 11') aus Drücke über 2000 bar standhaltenden Röhren bestehen, die zum Ausgleich einer eventuellen Relativbewegung zwischen der Lagerbuchse (5) und dem Einbaustück (2) elastisch verformbar sind.

5. Ölfilmlager nach einem der Ansprüche 1 bis 4,
**dadurch gekennzeichnet,**
**daß** das Rückschlagventil (18) und/oder die Drosseln (15, 15') dem Anschlußblock (12) auswechselbar zugeordnet sind.

6. Ölfilmlager nach einem der Ansprüche 1 bis 5,
**dadurch gekennzeichnet,**
**daß** eine bundlose Lagerbuchse (5) zum Einsatz kommt.

## Claims

1. Oil film bearing (1) for roll pins (4), which, or the pin bush (3) of which drawn onto it, is surrounded by a bearing bush (5) arranged in a chock (2), wherein the bearing bush (5) comprises at least two internally disposed hydrostatic pockets (9, 9'), which are arranged substantially in a common axial line and which can be supplied with a pressure medium by way of a non-return valve (18) and by way of bores (6, 6') extending in the bearing bush (5), and wherein throttles (15, 15') in the bores (6, 6') ensure an optimal hydrostatic bearing even in a case of a skewed position of the roll pin (4) or of the pin bush (3) in the bearing bush (5), **characterised in that** the at least two bores (6, 6') are connected with a connecting block (12), that the throttles (15, 15') are accommodated in the connecting block (12) and that the non-return valve (18) is associated with the connecting block (12).

2. Oil film bearing according to claim 1, **characterised in that** the connecting block (12) is mounted at the chock (2) to be freely accessible.

3. Oil film bearing according to claim 1 or 2, **characterised in that** the bores (6, 6') and the connecting block (12) are provided with high-pressure connections (10, 10'; 13, 13') and that the high-pressure connections (10, 10') of the bores (6, 6') are connected together with the high-pressure connections (13, 13') of the connecting block (12) by way of fixed lines (11, 11').

4. Oil film bearing according to claim 3, **characterised in that** the lines (11, 11') consist of pipes which withstand pressures above 2000 bars and which are resiliently deformable in order to provide compensation for possible relative movement between the bearing bush (5) and the chock (2).

5. Oil film bearing according to any one of claims 1 to 4, **characterised in that** the non-return valve (18) and/or the throttles (15, 15') is or are exchangeably associated with the connecting block (12).

6. Oil film bearing according to any one of claims 1 to 5, **characterised in that** a shoulderless bearing bush (5) is used.

## Revendications

1. Palier à film d'huile (1) pour tourillon de cylindre (4), qui est entouré ou dont le manchon (3) de tourillon placé sur ledit tourillon est entouré d'un coussinet (5) de palier disposé dans une empoise (2), le coussinet (5) de palier présentant au moins deux gaines hydrostatiques (9, 9') internes essentiellement disposées sur une ligne axiale commune, qui peuvent être alimentées en agent sous pression via un clapet antiretour (18) et des trous (6, 6') s'étendant dans le coussinet (5) de palier et où des restrictions (15, 15') dans les trous (6, 6') assurent un logement hydrostatique optimal, même dans le cas d'une position inclinée du tourillon (4) de cylindre ou du manchon (3) de tourillon dans le coussinet (5) de palier, **caractérisé**
**en ce que** lesdits au moins deux trous (6, 6') sont reliés à un bloc de raccordement (12), en ce que les restrictions (15, 15') sont reprises dans le bloc de raccordement (12) et en ce que le clapet antiretour (18) est associé au bloc de raccordement (12).

2. Palier à film d'huile selon la revendication 1, **caractérisé**
**en ce que** le bloc de raccordement (12) est fixé sur l'empoise (2) en étant librement accessible.

3. Palier à film d'huile selon la revendication 1 ou 2, **caractérisé**
**en ce que** les trous (6, 6') et le bloc de raccordement (12) sont pourvus de raccords haute pression (10, 10'; 13, 13') et en ce que les raccords haute pression (10, 10') des trous (6, 6') sont reliés aux raccords haute pression (13, 13') du bloc de raccordement (12) via des conduites fixes (11, 11').

4. Palier à film d'huile selon la revendication 3, **caractérisé**
**en ce que** les conduites (11, 11') sont constituées par des tuyaux résistant à des pressions supérieures à 2000 bars qui sont élastiquement déformables pour compenser un éventuel mouvement relatif entre les coussinets (5) de palier et l'empoise (2).

5. Palier à film d'huile selon l'une quelconque des revendications 1 à 4, **caractérisé**
**en ce que** le clapet antiretour (18) et/ou les restrictions (15, 15') sont associés au bloc de raccordement (12) en étant remplaçables.

6. Palier à film d'huile selon l'une quelconque des revendications 1 à 5, **caractérisé**
**en ce qu'**on utilise un coussinet (5) de palier sans collerette.
